# EUROPEAN PATENT APPLICATION

(11) **EP 4 821 705 A1**
(43) Date of publication of application: **14.10.2026**
(21) Application number: 24903435.6
(22) Date of filing: 15.11.2024
(51) Int. Cl.: B60C 11/12, B60C 1/00, B60C 3/04, B60C 11/00, C08K 3/04, C08K 3/36, C08L 9/06, C08L 21/00, C08L 101/00

(54) **TIRE**

(30) Priority: 15.12.2023 JP 2023211844
(71) Applicant: SUMITOMO RUBBER INDUSTRIES, LTD., Kobe-shi, Hyogo 651-0072 (JP)
(72) Inventor: MORITA Koki, Kobe-shi, Hyogo 651-0072 (JP); HIRAO Shogo, Kobe-shi, Hyogo 651-0072 (JP)
(74) Representative: Manitz Finsterwald Patent- und Rechtsanwaltspartnerschaft mbB
(86) International application number: PCT/JP2024/040587
(87) International publication number: WO 2025/126775

(57) **Abstract**

The present invention is a tire, having a tread portion, wherein: in a land portion on a surface of the tread portion, a groove is formed that comprises an opening facing the surface of the tread portion and a groove bottom, and that has a width of 2 mm or less and a depth of 20 mm or less; the opening and the groove bottom intersect in planar view of the surface of the tread portion; the ratio X of the area of the intersection of the opening and the groove bottom to the area of the opening in planar view of the surface of the tread portion is 95% or less; the tread portion is formed of a rubber composition containing rubber components, silica and carbon black, the ratio Y of the silica content (parts by mass) to the carbon black content (parts by mass) is greater than 50%, and furthermore, X/Y < 1.5; and the aim of the present invention is to further improves the late-wear grip performance.

## Description

### [TECHNICAL FIELD]

The present invention relates to a tire.

### [BACKGROUND ART]

In recent years, there has been a growing demand for improved grip performance in tires when the tread is worn down by driving (late-wear grip performance), and various technologies have been proposed to achieve this (for example, Patent Document 1). However, these are still not sufficient, and further improvements are needed.

### [PRIOR ART DOCUMENTS]

### [PATENT DOCUMENT]

[Patent Document 1] JP 2022-19300 A

### [SUMMARY OF INVENTION]

### [PROBLEM TO BE SOLVED BY THE INVENTION]

In view of the above problems, the present invention aims to further improve the late-wear grip performance of tires.

### [MEANS FOR SOLVING THE PROBLEM]

The present invention is;
a tire having a tread portion,
a groove having an opening facing the surface of the tread and a groove bottom, with a width of 2 mm or less and a depth of 20 mm or less is formed on the land portion of the tread portion surface,
the opening and the groove bottom intersect when the surface of the tread is viewed in planar view,
ratio X of the area of the intersection of the opening and the groove bottom to the area of the opening when viewed from above on the surface of the tread portion is 95% or less,
the tread portion is formed from a rubber composition containing rubber components, silica, and carbon black, wherein the ratio Y of the silica content (parts by mass) to the carbon black content (parts by mass) is more than 50%, and$X / Y < 1.5 .$

### [EFFECT OF THE INVENTION]

According to the present invention, the late-wear grip performance of tires can be further improved.

### [BRIEF EXPLANATION OF THE DRAWING]

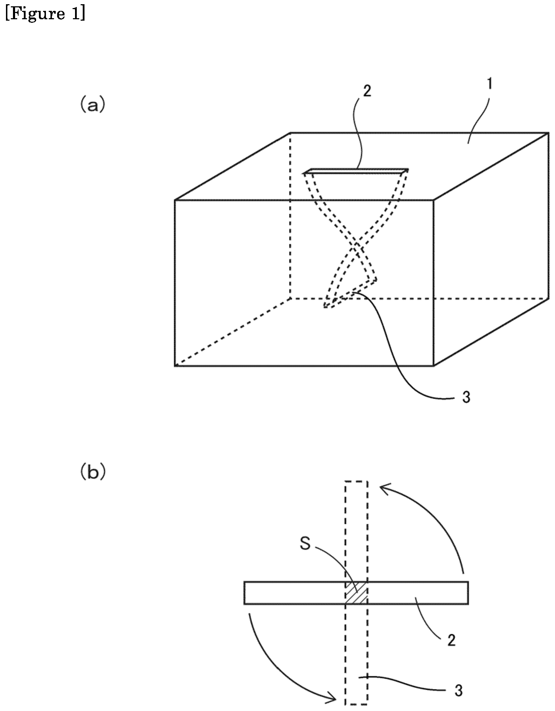

[Figure. 1] (a) a schematic perspective view and (b) a schematic planar view illustrating the grooves provided in the tire according to the present invention.

### [EMBODIMENTS FOR CARRYING OUT THE INVENTION]

### [1] Features of the tire according to the present invention

First, the features of the tire according to the present invention will be described.

### 1. Overview

The tire according to the present invention is a tire having a tread portion, and a groove (hereinafter also referred to as "sipes") with a width of 2 mm or less and a depth of 20 mm or less is formed on the land portion of the surface of the tread portion, having an opening facing the surface of the tread portion and a groove bottom. In these sipes, the opening and the groove bottom intersect when the surface of the tread portion is viewed from above, and the ratio X of the area of the intersection of the opening and the groove bottom to the area of the opening when the surface of the tread portion is viewed from above is 95% or less. Furthermore, the tread portion is formed of a rubber composition containing rubber components, silica and carbon black, and the ratio Y of the silica content (parts by mass) to the carbon black content (parts by mass) is more than 50%. In addition, the ratio of X to Y (X/Y) is less than 1.5.

These features, as will be described later, make it possible to improve the late-wear grip performance of the tires.

### 2. Mechanism of effect manifestation in the tire according to the present invention

The mechanism by which the above-mentioned effects are manifested in the tire according to the present invention is thought to be as follows.

### (1) Shape of the tread

As described above, in the tire according to the present invention, sipes are formed on the land portion of the tread portion surface, each having an opening facing the tread portion surface and a groove bottom. When the surface of the tread portion is viewed from above, these sipes are formed in a shape where the opening and the groove bottom intersect, that is, a twisted shape.

By providing these twisted sipes on the surface of the tread, it is believed that tire wear can be appropriately controlled, ensuring tread rigidity even in the later stages of wear, and improving the late-wear grip performance.

At this time, if a sufficient twist shape is not formed, that is, if the area of the intersection (overlapped potion) between the opening and the groove bottom is not small enough, the late-wear grip performance cannot be sufficiently improved. Therefore, in the present invention, the ratio X (= B/ A) of the area B (mm²) of the intersection between the opening and the groove bottom to the area A (mm²) of the opening when the surface of the tread portion is viewed in plan is set to 95% or less. More preferably the ratio X is 90% or less, further preferably 80% or less, further preferably 70% or less, further preferably 60% or less, and further preferably 50% or less. As a lower limit, for example, it is preferably 1% or more, more preferably 5% or more, further preferably 10% or more, further preferably 20% or more, further preferably 30% or more, and further preferably 40% or more.

### (2) Rubber composition for forming the tread portion

In the present invention, the tread portion is formed from a rubber composition containing rubber components, silica, and carbon black, wherein the ratio Y (=Si/CB) of silica content (Si; parts by mass) to carbon black content (CB; parts by mass) is greater than 50%.

By containing reinforcing agents, i.e. carbon black and silica, into the rubber composition, it is believed that tire wear can be appropriately controlled even in the later stages of wear, ensuring tread rigidity and improving the late-wear grip performance.

Unlike carbon black, silica contains hydration water and functional groups on its surface and they capture ozone, improving the tire's ozone resistance, thus enhancing its durability and ensuring sufficient wear resistance. Therefore, in this invention, the ratio Y (=Si/CB) of silica content (Si; parts by mass) to carbon black content (CB; parts by mass) is set to more than 50%. The ratio Y is more preferable to be 70% or more, further preferable to be 100% or more, further preferable to be 130% or more, further preferable to be 160% or more, and further preferable to be 200% or more. As an upper limit, for example, it is preferable to be 500% or less, more preferable to be 460% or less, further preferable to be 420% or less, further preferable to be 380% or less, further preferable to be 340% or less, and further preferable to be 300% or less.

### (3) X/Y

Furthermore, in the present invention, the ratio of X to Y (X/Y) is controlled to less than 1.5. This allows the effect of the twisted sipes and the effect of the rubber composition to work together to more appropriately control tire wear, ensuring tread rigidity even in the later stages of wear and improving the late-wear grip performance. The ratio of X is more preferably 1.4 or less, further preferably 1.2 or less, further preferably 1.0 or less, further preferably 0.8 or less, and further preferably 0.7 or less. As a lower limit, it is preferably 0.01 or more, more preferably 0.03 or more, further preferably 0.10 or more, further preferably 0.15 or more, further preferably 0.20 or more, further preferably 0.25 or more, and further preferably 0.32 or more.

### [2] More Preferred Embodiments of the Tire according to the present Invention

The tire according to the present invention can achieve even greater effects by adopting the following embodiments.

### 1. Multi-layering of the tread portion

In the tire according to the present invention, the preferred thickness of the tread portion is 10 mm or more and 20 mm or less. It is more preferably 12 mm or more and 18 mm or less, and further preferably 14 mm or more and 16 mm or less.

The tread portion may be formed from only one cap rubber layer, but it may also be made of two layers by providing a base rubber layer inside the cap rubber layer, or it may be made of three layers, or even four or more layers.

In this case, the thickness of the cap rubber layer over the entire tread is preferably 10% or more, more preferably 30% or more, further preferably 50% or more, and further preferably 70% or more. This allows sufficient friction to be generated between the tread portion surface and the road surface even in the later stages of wear, and is thought to further improve the late-wear grip performance.

The aforementioned tread thickness refers to the thickness of the tread on the tire's equatorial plane in the tire's radial cross-section. When the tread is formed from one rubber composition, it refers to the thickness of that rubber composition. When it is formed from a laminated structure of multiple rubber compositions, as described later, it refers to the total thickness of these layers.

In this invention, the tread portion refers to the component that forms the contact surface of the tire, and specifically to the portion radially outside the component containing fibrous materials such as the carcass, belt layer, and belt reinforcement layer. Furthermore, the thickness of the tread portion can be measured by cutting a cross section of the tire radially and aligning the bead portion with the standardized rim width.

In the above description, the "standardized rim" is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK ". Reference is made in the order of JATMA, ETRTO, and TRA, and if there is an applicable size at the time of reference, that standard is followed. In the case of tires that are not specified in the standard, it refers a rim that can be assembled and can maintain internal pressure, that is, a rim that does not cause air leakage from between the rim and the tire, and has the smallest rim diameter, and then the narrowest rim width.

### 2. Aspect ratio

The aspect ratio is the ratio of the cross-sectional height to the cross-sectional width of a tire. A smaller aspect ratio (lower cross-sectional height) is generally considered to improve grip performance. On the other hand, if the aspect ratio becomes too low, it may lead to a deterioration in ride comfort.

Considering these points, in the tire according to the present invention, the aspect ratio is preferably 30% or more and 60% or less, and more preferably 40% or more and 50% or less.

The aspect ratio (%) mentioned above can be calculated using the following formula, with the cross-sectional height Ht (mm), cross-sectional width Wt (mm), tire outer diameter Dt (mm), and rim diameter R (mm) of a tire at an internal pressure of 250 kPa. $Aspect ratio \left(%\right) = \left(Ht/Wt\right) \times 100 \left(%\right)$ $Ht = \left(Dt-R\right) / 2$

### 3. Styrene content in SBR

In the rubber composition constituting the tread portion of the tire according to the present invention, when styrene-butadiene rubber (SBR) with a low styrene content (mass ratio) is used as the rubber component, minute styrene domains can be formed within the rubber matrix, which is thought to lead to further improvements in the late-wear grip performance.

Specifically, SBR with a styrene content of 25% by mass or less is preferred. The styrene content is more preferably 20% by mass or less, and further preferably 15% by mass or less. On the other hand, the lower limit of the styrene content is preferably 4% by mass or more, more preferably 5% by mass or more, and further preferably 6% by mass or more.

The above-mentioned SBR with a styrene content of 25% by mass or less indicates that, when the rubber component contains only one styrene-containing polymer (SBR), it indicates that the styrene amount is 25 % by mass or less. When the rubber component contains multiple styrene-containing polymers (SBR), it indicates that the styrene amount calculated by the sum of the product of the styrene amount (% by mass) in each polymer and the mixing amount (parts by mass) of that polymer in 100 parts by mass of the rubber component is 25 % by mass or less.

More specifically, when 100 parts by mass of the rubber component contains SBR1 (X1 parts by mass) having a styrene amount S1% by mass and SBR2 (X2 parts by mass) having a styrene amount S2% by mass, the amount of styrene calculated from the formula {(S1×X1) + (S2×X2)} / (X1+X2) is 25% by mass or less.

In addition, in the rubber composition after vulcanization, the amount of styrene can also be calculated by determining the amount of styrene contained in the rubber component after acetone extraction using solid-state nuclear magnetic resonance (solid-state NMR) or a Fourier transform infrared spectrophotometer (FTIR).

### 4. Silica particle size

As described above, in the present invention, silica is contained in the rubber composition that forms the tread portion, and in this case, the particle size (average primary particle size) of the silica is preferably 17 nm or less.

The average primary particle diameter can be calculated by directly observing silica extracted from the rubber composition cut from the tire using an electron microscope (TEM) or the like, calculating the equicross-sectional area diameter from the area of each silica particle obtained, and then determining the average value.

### 5. Content of resin components

In the present invention, it is preferable that the rubber composition forming the tread portion contains a resin component.

By containing a resin component in the rubber composition, the adhesive properties of the resin component can maintain grip on the road surface, thereby further improving the late-wear grip performance.

Examples of preferred resin components include rosin-based resins, styrene-based resins, coumarone-based resins, terpene-based resins, C5 resins, C9 resins, C5C9 resins, and acrylic resins, which will be discussed later. Among these, terpene-based resins are more preferred.

### [3] Embodiment

The present invention will be described in detail below based on embodiments.

### 1. Sipes

Figure 1 shows (a) a schematic perspective view and (b) a schematic planar view illustrating the grooves provided in the tire according to the present invention. In Figure 1, a sipe is shown provided in one land area of the tread, where 1 is the land portion, 2 is the opening, and 3 is the groove bottom. S is the intersection of the opening and the groove bottom.

As shown in Figure 1(a), the sipe is provided with a twist from the opening 2 to the bottom of the groove 3, and when viewed from above, an intersection S is formed where the opening 1 and the bottom of the groove 2 overlap, as shown in Figure 1(b).

Furthermore, as described above, by setting the ratio of the area of intersection S to the area of the opening 2 to 95% or less, the late-wear grip performance can be sufficiently improved.

### 2. Rubber composition

In this embodiment, the rubber composition constituting the tread portion can be obtained by kneading various compounding materials such as rubber components, reinforcing materials, anti-aging agents, oils, resin materials, and anti-aging agents.

### (1) Compounding materials

### (a) Rubber component

The rubber component is not particularly limited, and for example, diene rubbers such as natural rubber (NR), styrene-butadiene rubber (SBR), butadiene rubber (BR), isoprene rubber (IR), acrylonitrile-butadiene rubber (NBR), chloroprene rubber (CR), and butyl rubber (IIR) can be used. These may be used individually or in combination of two or more, and in the present invention, the combination of SBR and isoprene rubber is preferred.

### (a-1) SBR

The weight-average molecular weight of SBR is, for example, more than 100,000 and less than 2,000,000. The styrene content of SBR is preferably more than 5% by mass, more preferably more than 10% by mass, and further preferably more than 15% by mass. On the other hand, it is preferably less than 40% by mass, more preferably less than 35% by mass, and further preferably less than 30% by mass. The vinyl content (amount of 1,2-bonded butadiene units) of SBR is preferably more than 5% by mass, more preferably more than 10% by mass, and further preferably more than 15% by mass. On the other hand, it is preferably less than 70% by mass, more preferably less than 40% by mass, and further preferably less than 30% by mass. The structural identification of SBR (measurement of styrene content and vinyl content) can be performed, for example, using an instrument from the JNM-ECA series manufactured by JEOL Ltd.

There is no particular limit on the SBR, and for example, emulsion-polymerized styrene-butadiene rubber (E-SBR), solution-polymerized styrene-butadiene rubber (S-SBR), and the like can be used. The SBR may be either unmodified SBR or modified SBR. In addition, hydrogenated SBR obtained by hydrogenating the butadiene portion of SBR may be used. The hydrogenated SBR may be obtained by subsequently hydrogenating the BR portion of SBR, or a similar structure may be obtained by copolymerizing styrene, ethylene, and butadiene.

The modified SBR may be any SBR having a functional group that interacts with a filler such as silica, and examples thereof include terminal-modified SBR in which at least one end of the SBR has been modified with a compound (modifying agent) having the functional group (terminal-modified SBR having the functional group at the end), main-chain-modified SBR having the functional group in the main chain, main-chain terminal-modified SBR having the functional group in the main chain and at least one end (for example, SBR having the functional group in the main chain and at least one end modified with the modifying agent), and terminal-modified SBR modified (coupled) with a polyfunctional compound having two or more epoxy groups in the molecule and having a hydroxyl group or epoxy group introduced therein.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, an epoxy group, and the like. These functional groups may have a substituent.

As the modified SBR, for example, SBR modified with a compound (modifying agent) represented by the following formula can be used.

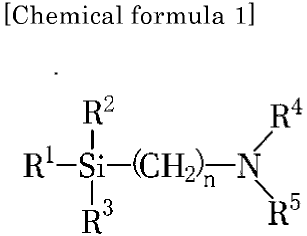

In the formula, R¹, R² and R³ are the same or different and represent an alkyl group, an alkoxy group, a silyloxy group, an acetal group, a carboxyl group (-COOH), a mercapto group (-SH) or a derivative thereof. R⁴ and R⁵ are the same or different and represent a hydrogen atom or an alkyl group. R⁴ and R⁵ may be bonded to form a ring structure together with the nitrogen atom. "n" represents an integer.

As the modified SBR modified with a compound (modifying agent) represented by the above formula, SBR in which the polymerization terminals (active terminals) of solution-polymerized styrene-butadiene rubber (S-SBR) have been modified with a compound represented by the above formula (such as the modified SBR described in JP-A-2010-111753), can be used.

R¹, R² and R³ are preferably alkoxy groups (preferably alkoxy groups having 1 to 8 carbon atoms, more preferably alkoxy groups having 1 to 4 carbon atoms). R⁴ and R⁵ are preferably alkyl groups (preferably alkyl groups having 1 to 3 carbon atoms). "n" is preferably 1 to 5, more preferably 2 to 4, and further preferably 3. When R⁴ and R⁵ are combined to form a ring structure together with the nitrogen atom, it is preferably a 4- to 8-membered ring. The alkoxy group also includes cycloalkoxy groups (cyclohexyloxy group, and the like) and aryloxy groups (phenoxy group, benzyloxy group, and the like).

Specific examples of the modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more kinds.

As the modified SBR, a modified SBR modified with the following compounds (modifying agents) may also be used. Examples of the modifying agents include, polyglycidyl ethers of polyhydric alcohols such as ethylene glycol diglycidyl ether, glycerin triglycidyl ether, trimethylolethane triglycidyl ether, and trimethylolpropane triglycidyl ether;
polyglycidyl ethers of aromatic compounds having two or more phenol groups such as diglycidyl bisphenol A;
polyepoxy compounds such as 1,4-diglycidylbenzene, 1,3,5-triglycidylbenzene, and polyepoxy-modified liquid polybutadiene;
epoxy group-containing tertiary amines such as 4,4'-diglycidyl-diphenylmethylamine and 4,4'-diglycidyl-dibenzylmethylamine;
diglycidylamino compounds such as diglycidyl aniline, N,N'-diglycidyl-4-glycidyloxyaniline, diglycidyl orthotoluidine,
tetraglycidylmetoxylendiamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis-(1-methylpropyl carbamic acid chloride, 4-morpholine carbonyl chloride, 1-pyrrolidine carbonyl chloride, N,N-dimethylcarbamic acid chloride, N,N-diethylcarbamic acid chloride;
epoxy group-containing silane compounds such as 1,3-bis-(glycidyloxypropyl)-tetramethyldisiloxane, and (3-glycidyloxypropyl)-pentamethyldisiloxane;
sulfide group-containing silane compounds such as (trimethylsilyl)[3-(trimethoxysilyl)propyl] sulfide, (trimethylsilyl) [3-(triethoxysilyl)propyl] sulfide, (trimethylsilyl) [3-(tripropoxysilyl)propyl] sulfide, (trimethylsilyl) [3-(tributoxysilyl)propyl] sulfide, (trimethylsilyl) [3-(methyldimethoxysilyl)propyl] sulfide, (trimethylsilyl) [3-(methyldiethoxysilyl)propyl] sulfide, (trimethylsilyl) [3-(methyldipropoxysilyl)propyl] sulfide, (trimethylsilyl) [3-(methyldibutoxysilyl)propyl] sulfide;
N-substituted aziridine compounds such as ethyleneimine, and propyleneimine;
alkoxysilanes such as methyltriethoxysilane, N,N-bis(trimethylsilyl)-3-aminopropyltrimethoxysilane, N,N-bis(trimethylsilyl)-3-aminopropyltriethoxysilane , N,N-bis(trimethylsilyl)aminoethyltrimethoxysilane, and N,N-bis(trimethylsilyl)aminoethyltriethoxysilane;
(thio) benzophenone compounds having an amino group and/or a substituted amino group, such as 4-N,N-dimethylaminobenzophenone, 4-N,N-di-t-butylaminobenzophenone, 4-N,N-diphenylaminobenzophenone, 4,4 '-bis(dimethylamino)benzophenone, 4,4'-bis(diethylamino)benzophenone, 4,4'-bis(diphenylamino)benzophenone, and N,N,N',N'-bis-(tetraethylamino)benzophenone;
benzaldehyde compounds having an amino group and/or a substituted amino group such as 4-N,N-dimethylaminobenzaldehyde, 4-N,N-diphenylaminobenzaldehyde, and 4-N,N-divinylaminobenzaldehyde;
N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N-substituted piperidones such as N-methyl-2-piperidone, N-vinyl-2-piperidone, and N-phenyl-2-piperidone; and
N-substituted lactams such as N-methyl-ε-caprolactam, N-phenyl -ε-caprolactam, N-methyl-ω-laurylolactam, N-vinyl-ω-laurylolactam, N-methyl-β-propiolactam, and N-phenyl-β-propiolactam; as well as N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetoamide, N-methylmaleimide, N,N-diethylurea, 1,3-dimethylethyleneurea, 1,3-divinylethyleneurea, 1,3-diethyl-2-imidazolidinone, 1-methyl-3-ethyl-2-imidazolidinone, 4-N,N-dimethylaminoacetophene, 4-N,N-diethylaminoacetophenone, 1,3-bis(diphenylamino)-2-propanone, and 1,7-bis(methylethylamino)-4-heptanone. Modification using the above compounds (modifiers) can be carried out by known methods.

As the SBR, for example, SBR manufactured and sold by Sumitomo Chemical Co., Ltd., ENEOS Material Corporation, Asahi Kasei Corporation, Zeon Corporation, etc. may be used. The SBR may be used individually or in combination of two or more kinds.

The SBR content in 100 parts by mass of rubber component is preferably 35 parts by mass or more, more preferably 40 parts by mass or more, further preferably 45 parts by mass or more, and further preferably 50 parts by mass or more. As an upper limit, for example, it is preferably 65 parts by mass or less, more preferably 60 parts by mass or less, and further preferably 55 parts by mass or less.

### (a-2) Isoprene rubber

Examples of isoprene-based rubbers include natural rubber (NR), isoprene rubber (IR), reformed NR, modified NR, and modified IR. NR is preferred due to its superior strength.

As NR, those commonly used in the tire industry, such as SVR-L, SIR20, RSS#3, and TSR20 can be used. IRs are not particularly limited and those commonly used in the tire industry, such as IR2200 manufactured by Nippon Zeon Co., Ltd. can be used. Examples of reformed NRs include deproteinized natural rubber (DPNR) and high-purity natural rubber (UPNR). Examples of modified NRs include epoxidized natural rubber (ENR), hydrogenated natural rubber (HNR), and grafted natural rubber. Examples of modified IRs include epoxidized isoprene rubber, hydrogenated isoprene rubber, and grafted isoprene rubber. These may be used individually or in combination of two or more types.

The isoprene-based rubber content in 100 parts by mass of rubber components is preferably 35 parts by mass or more, more preferably 40 parts by mass or more, further preferably 45 parts by mass or more, and further preferably 50 parts by mass or more. As an upper limit, for example, it is preferably 65 parts by mass or less, more preferably 60 parts by mass or less, and further preferably 55 parts by mass or less.

### (a-3) BR

The rubber composition may contain BR as needed. The weight-average molecular weight of BR is, for example, more than 100,000 and less than 2,000,000. The vinyl content of BR is, for example, more than 1% by mass and less than 30% by mass. The cis content of BR is, for example, more than 1% by mass and 98% by mass or less. The trans content of BR is, for example, more than 1% by mass and less than 60% by mass. The cis content can be measured by infrared absorption spectroscopy.

BR is not particularly limited, and high-cis content BR (cis content of 90% or more), low-cis content BR, or BR containing syndiotactic polybutadiene crystals can be used. BR can be either unmodified BR or modified BR, and for example, modified BR can be BR modified with a compound (modifying agent) represented by the following formula.

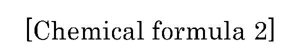

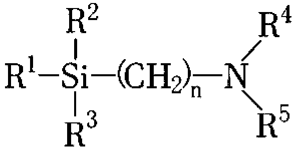

In the formula, R¹, R² and R³ are the same or different and each represents an alkyl group, an alkoxy group, a silyloxy group, an acetal group, a carboxyl group (-COOH), a mercapto group (-SH) or a derivative thereof. R⁴ and R⁵ are the same or different and represent a hydrogen atom or an alkyl group. R⁴ and R⁵ may be combined to form a ring structure together with the nitrogen atom. n represents an integer.

Examples of the modified BR modified with the compound (modifying agent) represented by the above formula include BR whose polymerization end (active end) is modified with the compound represented by the above formula.

As R¹, R² and R³, an alkoxy group is suitable (preferably an alkoxy group having 1 to 8 carbon atoms, more preferably an alkoxy group having 1 to 4 carbon atoms). As R⁴ and R⁵, an alkyl group (preferably an alkyl group having 1 to 3 carbon atoms) is suitable. n is preferably 1 to 5, more preferably 2 to 4, and even more preferably 3. Further, when R⁴ and R⁵ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified BR, a modified BR modified with the following compound (modifying agent) can also be used. Examples of the modifying agent include
polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;
amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3- (trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3- (tributoxysilyl) propyl] sulfide, (trimethylsilyl) [3-(methyldimethoxysilyl) propyl] sulfide, (trimethylsilyl) [3-(methyldiethoxysilyl) propyl] sulfide, (trimethylsilyl) [3-(methyldipropoxysilyl) propyl] sulfide, and (trimethylsilyl) [3-(methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) - 3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as N-methyl-2-piperidone, N-vinyl-2-piperidone, and N-phenyl-2-piperidone;
N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method. These modified BR may be used alone or in combination of two or more.

As the BR, for example, products manufactured by Ube Industries, Ltd., ENEOS Materials Co., Ltd., Asahi Kasei Co., Ltd., Nippon Zeon Corporation, etc. can be used.

The BR content in 100 parts by mass of rubber component is preferably 5 parts by mass or more, and more preferably 10 parts by mass or more. On the other hand, it is preferably 25 parts by mass or less, and more preferably 20 parts by mass or less.

### (a-4) Other rubber components

The rubber composition may also contain, as necessary, rubbers (polymers) commonly used in tire manufacturing, such as nitrile rubber (NBR), as other rubber component.

### (b) Compounding materials other than rubber components (b-1) Filler

The rubber composition contains reinforcing agents such as carbon black and silica as fillers. In addition to carbon black and silica, other fillers such as calcium carbonate, talc, alumina, clay, aluminum hydroxide, and mica can also be used. When silica is used, it is preferable to use it in combination with a silane coupling agent.

The total content of filler is preferably 40 parts by mass or more, more preferably 50 parts by mass or more, further preferably 60 parts by mass or more, and further preferably 90 parts by mass or more, per 100 parts by mass of rubber component. On the other hand, from the viewpoint of dispersibility in the rubber composition, it is preferably 150 parts by mass or less, more preferably 120 parts by mass or less, and further preferably 100 parts by mass or less.

### (i) Carbon Black

Carbon black is used to improve the crack growth resistance, durability, and UV degradation resistance of tires.

From the viewpoint of reinforcing properties for rubber, the nitrogen adsorption specific surface area (N₂SA) of carbon black is preferably 30 m²/g or more, more preferably 50 m²/g or more, and further preferably 60 m²/g or more. On the other hand, from the viewpoint of exothermic properties, it is preferably 250 m²/g or less, more preferably 150 m²/g or less, and further preferably 120 m²/g or less. The nitrogen adsorption specific surface area of carbon black is measured according to ASTM D4820-93.

From the viewpoint of rubber rigidity, the amount of dibutyl phthalate (DBP) absorbed by carbon black is preferably 50 ml/100 g or more, and more preferably 100 ml/100 g or more. On the other hand, from the viewpoint of the followability to deformation of rubber, it is preferably 250 ml/100 g or less, and more preferably 150 ml/100 g or less. The amount of DBP absorbed by carbon black is measured according to ASTM D2414-93.

Carbon black is not particularly limited and examples thereof include furnace blacks (furnace carbon blacks) such as SAF, ISAF, HAF, MAF, FEF, SRF, GPF, APF, FF, CF, SCF, and ECF; acetylene black (acetylene carbon black); thermal blacks (thermal carbon blacks) such as FT and MT; and channel blacks (channel carbon blacks) such as EPC, MPC, and CC. These may be used individually or in combination of two or more types.

In addition to carbon black made from mineral oil and other raw materials, biomass-derived carbon black obtained by burning lignin, and recycled carbon black obtained by thermally decomposing and refining rubber products containing carbon black, such as tires, may also be used as replacements in equal amounts as appropriate.

The specific carbon black is not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used individually or in combination of two or more.

The carbon black content per 100 parts by mass of rubber component is preferably 20 parts by mass or more, more preferably 30 parts by mass or more, and further preferably 40 parts by mass or more. As an upper limit, for example, it is preferably 80 parts by mass or less, more preferably 70 parts by mass or less, and further preferably 60 parts by mass or less.

### (ii) Silica

The hydration water and surface functional groups contained in silica can capture ozone, thereby improving ozone resistance and thus the durability of the tire is improved.

As for silica, if the average primary particle size is too small, the processability will become poor, so it is preferable to use silica with a particle size of more than 8 nm. It is more preferable if it is 9 nm or larger, and further preferable if it is 10 nm or larger. On the other hand, from the viewpoint of ensuring the reinforcing properties of the rubber and ensuring steering stability on wet road surfaces during running, it is preferable if it is 25 nm or smaller, more preferably 20 nm or smaller, and further preferable if it is 17 nm or smaller.

The average primary particle diameter of silica refers to the average value of measurements taken by observing the smallest particle unit of silica constituting the aggregated structure as a circle, and measuring the absolute maximum length of that smallest particle as the diameter of the circle. This can be determined by observing with a transmission or scanning electron microscope, measuring 400 or more primary silica particles observed within the field of view, and averaging the results.

From the viewpoint of obtaining good durability performance, the BET specific surface area of silica is preferably greater than 100 m²/g, and more preferably greater than 130 m²/g. On the other hand, it is preferably less than 250 m²/g, and more preferably less than 200 m²/g. The above-mentioned BET specific surface area is the N₂SA value measured by the BET method in accordance with ASTM D3037-93.

Examples of silica include dry-process silica (anhydrous silica), wet-process silica (hydrated silica), and colloidal silica. Among these, wet-process silica, which contains hydrated water and a large amount of silanol groups and can effectively capture ozone, is preferred. Silica made from hydrated glass or silica made from biomass materials such as rice husks may also be used.

As silica, products of Evonik Industries Co., Ltd., Rhodia Co., Ltd., Tosoh Silica Co., Ltd., Solvay Japan Co., Ltd., Tokuyama Corporation, etc. can be used.

The silica content per 100 parts by mass of rubber component is preferably 30 parts by mass or more, more preferably 60 parts by mass or more, further preferably 70 parts by mass or more, and further preferably 80 parts by mass or more. As an upper limit, from the viewpoint of dispersibility in the rubber composition, it is preferably 120 parts by mass or less, more preferably 110 parts by mass or less, further preferably 100 parts by mass or less, and further preferably 90 parts by mass or less.

### (iii) Silane coupling agent

When using silica, it is preferable to use a silane coupling agent in combination to improve the dispersibility of silica and to enhance mechanical properties and moldability through reaction with silica.

The silane coupling agent is not particularly limited. Examples of the silane coupling agent include
sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis(3-triethoxysilylpropyl)disulfide, bis(2-triethoxysilylethyl) disulfide, bis(4-triethoxysilylbutyl)disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;
mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as γ-glycidoxypropyltriethoxysilane and γ-glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane and 3-chloropropyltriethoxysilane. Among these, silane coupling agents having a thiocarbonyl group, such as NXT mentioned above, are preferred. These may be used individually or in combination of two or more.

As the silane coupling agent, for example, products available from Evonik Industries Co., Ltd., Momentive Corporation, Shin-Etsu Silicones Co. Ltd., Tokyo Chemical Industry Co. Ltd., Azumax Co. Ltd., Dow Corning Toray Co. Ltd., etc. can be used.

The silane coupling agent content is preferably, for example, more than 2 parts by mass, more preferably more than 3 parts by mass, further preferably 5 parts by mass or more, and further preferably 7 parts by mass or more, per 100 parts by mass of silica. The upper limit is preferably, for example, less than 15 parts by mass, more preferably 12 parts by mass or less, further preferably 10 parts by mass or less, and further preferably 9 parts by mass or less.

### (iv) Other fillers

In addition to the carbon black and silica mentioned above, the rubber composition may further contain fillers commonly used in the tire industry, such as graphite, calcium carbonate, talc, alumina, clay, aluminum hydroxide, mica, and magnesium sulfate. The content of these fillers is, for example, more than 0.1 parts by mass and less than 150 parts by mass per 100 parts by mass of the rubber component.

### (b-2) Plasticizer components

In rubber compositions, it is preferable to use plasticizer components as needed, taking into consideration the proper dispersion of powder materials during kneading. Here, plasticizer components refer to substances that plasticize the rubber composition, such as process oils, rubber compound extension oils, liquid rubber, and resin components.

In this case, the content of the plasticizer component per 100 parts by mass of the rubber component is preferably 10 parts by mass or more, more preferably 15 parts by mass or more, further preferably 20 parts by mass or more, and further preferably 30 parts by mass or more. As an upper limit, for example, it is preferably 50 parts by mass or less, more preferably 45 parts by mass or less, and further preferably 40 parts by mass or less.

Note, the content of plasticizer components includes the amount of oil contained in rubber (oil-applied rubber), etc.

### (i) Oil

Examples of oils include mineral oils, synthetic oils, vegetable oils, animal oils, or mixtures thereof.

Examples of mineral oils include paraffinic, aromatic, and naphthenic oils. For example, products available from Idemitsu Kosan Co., Ltd., Sankyo Yuka Kogyo Co., Ltd., ENEOS Corporation, Orisoy Co., Ltd., H&R Co., Ltd., Toyokuni Oil Co., Ltd., Showa Shell Oil Co., Ltd., Fuji Kosan Co., Ltd., etc. can be used. These may be used individually or in combination of two or more types.

Furthermore, from a life cycle assessment perspective, lubricating oils used in rubber mixers and engines, or waste cooking oil used in restaurants and the like may be refined and used.

Examples of vegetable oils include linseed oil, rapeseed oil, safflower oil, soybean oil, corn oil, cottonseed oil, rice bran oil, tall oil, sesame oil, perilla oil, castor oil, tung oil, pine oil, pine tar oil, sunflower oil, coconut oil, palm oil, palm kernel oil, olive oil, camellia oil, jojoba oil, macadamia nut oil, peanut oil, grapeseed oil, and wood wax.

Furthermore, vegetable oils can also include refined oils (such as salad oil) obtained by refining the above-mentioned oils, transesterified oils obtained by transesterification, hydrogenated oils obtained by hydrogenation, thermally polymerized oils obtained by thermal polymerization, oxidized polymerized oils obtained by oxidation, and waste cooking oils recovered from use as edible oils. Vegetable oils may be liquid or solid at room temperature (25°C). These may be used individually or in combination of two or more types.

As the vegetable oil, acylglycerol is preferred, and triacylglycerol is more preferred. Acylglycerol refers to a compound in which a hydroxyl group of glycerin is esterified with a carboxylic acid. The acylglycerol is not particularly limited and may be 1-monoacylglycerol, 2-monoacylglycerol, 1,2-diacylglycerol, 1,3-diacylglycerol, or triacylglycerol. Furthermore, the acylglycerol may be a monomer, a dimer, or a trimer or more. Acylglycerols of two or more mers can be obtained by thermal polymerization, oxidative polymerization, etc. Also, the acylglycerol may be a liquid or a solid at room temperature (25°C).

There are no particular limitations on the method for confirming whether a rubber composition contains acylglycerol, but it can be confirmed by ¹H-NMR measurement. For example, if a rubber composition containing triacylglycerol is immersed in deuterated chloroform at room temperature (25°C) for 24 hours, and after removing the rubber composition, ¹H-NMR is measured at room temperature, and the signal for tetramethylsilane (TMS) is set to 0.00 ppm, signals around 5.26 ppm, 4.28 ppm, and 4.15 ppm are observed. Since these signals are presumed to originate from hydrogen atoms bonded to carbon atoms adjacent to the oxygen atom of the ester group, the presence of acylglycerol can be confirmed. Here, "around" refers to a range of ±0.10 ppm.

The carboxylic acid is not particularly limited and may be either an unsaturated fatty acid or a saturated fatty acid. Examples of unsaturated fatty acids include monounsaturated fatty acids such as oleic acid, and polyunsaturated fatty acids such as linoleic acid and linolenic acid.

As for vegetable oils, products commercially available from Idemitsu Kosan Co., Ltd., Sankyo Yuka Industries Co., Ltd., ENEOS Corporation, Orisoy Co., Ltd., H&R Co., Ltd., Toyokuni Oil Co., Ltd., Fuji Kosan Co., Ltd., and Nisshin Oillio Group Ltd. can be used.

### (ii) Liquid rubber

Liquid rubber is a polymer that is in a liquid state at room temperature (25°C) and is a rubber component that can be extracted from vulcanized tires by acetone extraction. Examples of liquid rubber include farnesene polymers, liquid diene polymers, and their hydrogenated derivatives.

The farnesene-based polymer is a polymer obtained by polymerizing farnesene, and has a structural unit based on farnesene. Farnesene includes isomers such as α-farnesene ((3E, 7E) -3,7,11-trimethyl-1,3,6,10-dodecatetraene) and β-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-equivalent weight-average molecular weight (Mw) measured by gel permeation chromatography (GPC) of, for example, more than 1.0 × 10³ and less than 2.0 × 10⁵. Here, the Mw of the liquid diene polymer is the polystyrene-equivalent value measured by gel permeation chromatography (GPC).

As for the liquid rubber, products available from Kuraray Co., Ltd., Clay Valley Corporation, etc. can be used.

### (iii) Resin components

The resin component also functions as a tackifier and may be solid or liquid at room temperature. Specific examples of the resin component include rosin-based resin, styrene-based resin, coumarone-based resin, terpene-based resin, C5 resin, C9 resin, C5C9 resin, and acrylic resin, and two or more of them may be used in combination. These resin components may be provided with a modified group capable of reacting with silica or the like, as necessary.

Rosin-based resins are resins whose main component is rosin acid obtained by processing pine resin. These rosin-based resins (rosins) can be classified according to whether they are modified or not, and can be classified into unmodified rosin (non-modified rosin) and modified rosin (rosin derivatives). Examples of unmodified rosins include tall rosin (also known as tall oil rosin), gum rosin, wood rosin, disproportionated rosin, polymerized rosin, hydrogenated rosin, and other chemically modified rosins. Modified rosin is a modification of unmodified rosin, and examples of such modifications include rosin esters, unsaturated carboxylic acid modified rosins, unsaturated carboxylic acid modified rosin esters, rosin amide compounds, and rosin amine salts.

The styrene-based resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in addition, copolymers obtained by copolymerizing a styrene monomer and other monomers that can be copolymerized with the styrene monomer.

Examples of the other monomers include acrylonitriles such as acrylonitrile and methacrylate; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; and α, β-unsaturated carboxylic acids and acid anhydrides thereof such as maleic anhydride.

As the coumarone-based resin, coumarone-indene resin is preferably used. Coumarone-indene resin is a resin containing coumarone and indene as monomer components constituting the skeleton (main chain) of the resin. Examples of the monomer component contained in the skeleton other than coumarone and indene include styrene, α-methylstyrene, methylindene, and vinyltoluene.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene-based resins include polyterpenes, terpene phenols, and aromatic-modified terpene resins. Polyterpene is a resin obtained by polymerizing a terpene compound and a hydrogenated product thereof. The terpene compound is a hydrocarbon having a composition of (C₅H₈)ₙ or an oxygen-containing derivative thereof, which is a compound having a terpene classified as monoterpenes (C₁₀H₁₆), sesquiterpenes (C₁₅H₂₄), diterpenes (C₂₀H₃₂), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

The C5 resin refers to a resin obtained by polymerizing a C5 fraction. Examples of the C5 fraction include petroleum fractions having 4 to 5 carbon atoms such as cyclopentadiene, pentene, pentadiene, and isoprene. As the C5-based petroleum resin, a dicyclopentadiene resin (DCPD resin) is preferably used.

The C9 resin refers to a resin obtained by polymerizing a C9 fraction, and may be hydrogenated or modified. Examples of the C9 fraction include petroleum fractions having 8 to 10 carbon atoms such as vinyltoluene, alkylstyrene, indene, and methyl indene. As the specific examples, a coumarone-indene resin, a coumarone resin, an indene resin, and an aromatic vinyl resin are preferably used. As the aromatic vinyl resin, a homopolymer of α-methylstyrene or styrene or a copolymer of α-methylstyrene and styrene is preferable because it is economical, easy to process, and excellent in heat generation. A copolymer of α-methylstyrene and styrene is more preferred. As the aromatic vinyl-based resin, for example, those commercially available from Clayton Co., Ltd., Eastman Chemical Co., Ltd., etc. can be used.

The C5C9 resin refers to a resin obtained by copolymerizing the C5 fraction and the C9 fraction, and may be hydrogenated or modified. Examples of the C5 fraction and the C9 fraction include the above-mentioned petroleum fraction. As the C5C9 resin, for example, those commercially available from Tosoh Corporation, LUHUA Co., Ltd., etc. can be used.

The acrylic resin is not particularly limited, but for example, a solvent-free acrylic resin can be used.

As the solvent-free acrylic resin, a (meth) acrylic resin (polymer) synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present disclosure, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, α-methylstyrene, vinyltoluene, vinylnaphthalene, divinylbenzene, trivinylbenzene, divinylnaphthalene, and the like may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

As resin components, products available from Maruzen Petrochemical Co., Ltd., Sumitomo Bakelite Co., Ltd., Yasuhara Chemical Co., Ltd., Tosoh Corporation, Rutgers Chemicals Co., Ltd., BASF, Kraton Co., Ltd., Nitto Chemical Co., Ltd., Nippon Shokubai Co., Ltd., ENEOS Corporation, Arakawa Chemical Industries, Ltd., Taoka Chemical Industries, Ltd., etc. can be used.

### (b-3) Lubricant (stearic acid)

The rubber composition may contain a lubricant. Fatty acid derivative-based lubricants, such as stearic acid, are preferably used, as the lubricant. Conventional known stearic acid products can be used; specifically, products available from NOF Corporation, Kao Corporation, Fujifilm Wako Pure Chemical Industries, Ltd., Chiba Fatty Acid Co., Ltd., etc. can be used. Furthermore, products such as Structol WB16 manufactured by Structol Corporation can also be used.

The stearic acid content is preferably, for example, more than 0.5 parts by mass and less than 10.0 parts by mass per 100 parts by mass of the rubber component.

### (b-4) Anti-aging agents

The rubber composition may contain an anti-aging agent. The content of the anti-aging agent is, for example, more than 1 part by mass and less than 10 parts by mass per 100 parts by mass of the rubber component.

Examples of the antiaging agent include naphthylamine-based antiaging agents such as phenyl-α-naphthylamine; diphenylamine-based antiaging agents such as octylated diphenylamine and 4,4'-bis (α, α'-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3- (3',5'-di-t-butyl-4'-hydroxyphenyl)propionate] methane. These may be used individually or in combination of two or more types.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

### (b-5) Zinc oxide

The rubber composition may contain zinc oxide. The content of zinc oxide is, for example, more than 0.5 parts by mass and less than 10 parts by mass with respect to 100 parts by mass of the rubber component. As the zinc oxide, a conventionally known product can be used, and for example, products of Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used.

### (b-6) Wax

The rubber composition may contain wax. The wax content is preferably, for example, 0.5 to 20 parts by mass, more preferably 1.0 to 15 parts by mass, and further preferably 1.5 to 10 parts by mass, per 100 parts by mass of the rubber component.

The wax is not particularly limited, and examples thereof include petroleum-based waxes such as paraffin wax and microcrystalline wax; natural waxes such as vegetable wax and animal wax; synthetic waxes such as polymers of ethylene, propylene. These may be used individually or in combination of two or more types.

As the wax, for example, products available from Ouchi Shinko Chemical Industry Co., Ltd., Nippon Seiro Co., Ltd., Seiko Chemical Co., Ltd., etc. can be used.

### (b-7) Crosslinking agents and vulcanization accelerators

The rubber composition preferably contains a crosslinking agent such as sulfur. Content of the crosslinking agent is, for example, more than 0.1 parts by mass and less than 10.0 parts by mass per 100 parts by mass of the rubber component. The sulfur content refers to the amount of pure sulfur, and if insoluble sulfur is used, it is the content excluding the oil content.

Examples of sulfur include powdered sulfur, precipitated sulfur, colloidal sulfur, insoluble sulfur, highly dispersible sulfur, soluble sulfur, etc., which are commonly used in the rubber industry. These may be used individually or in combination of two or more types.

As the sulfur, for example, products available from Tsurumi Chemical Industry Co., Ltd., Karuizawa Sulfur Co., Ltd., Shikoku Chemical Industry Co., Ltd., Flexsys Corporation, Nippon Kanryu Kogyo Co., Ltd., Hosoi Chemical Industry Co., Ltd., etc. can be used.

Crosslinking agents other than sulfur may be used. Specifically, for example, sulfur-containing vulcanizing agents such as Tackyrol V200 manufactured by Taoka Chemical Industries, Ltd., DURALINK HTS (1,6-hexamethylene-dithiosulfate sodium dihydrate) manufactured by Flexsys Corporation, and KA9188 (1,6-bis(N,N'-dibenzylthiocarbamoyldithio) hexane: hybrid crosslinking agent) manufactured by LANXESS Corporation, as well as organic peroxides such as dicumyl peroxide, can be used.

Furthermore, the rubber composition preferably contains a vulcanization accelerator. The content of vulcanization accelerator is, for example, more than 0.3 parts by mass and less than 10.0 parts by mass per 100 parts by mass of the rubber component.

Examples of the vulcanization accelerator include thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenyl guanidine, di-orthotolyl guanidine, and orthotolyl biguanidine. These can be used individually or in combination of two or more.

### (b-8) Others

In addition to the components described above, the rubber composition may also contain additives commonly used in the tire industry, for example organic fillers such as cellulose fibers and organic peroxides, as needed. The content of these additives is, for example, more than 0.1 parts by mass and less than 50 parts by mass per 100 parts by mass of the rubber component.

### (2) Preparation of rubber composition

The rubber composition can be produced by a general method, for example, a manufacturing method that includes a base mixing step in which a rubber component is mixed with a filler such as carbon black, and a finish mixing step in which the mixture obtained in the base mixing step is mixed with a crosslinking agent.

The kneading can be carried out using a known (internal) kneading machine such as a Banbury mixer, a kneader, or an open roll.

The kneading temperature in the base kneading step is, for example, higher than 50°C and lower than 200°C, and the kneading time is, for example, longer than 30 seconds and shorter than 30 minutes. In the base kneading step, in addition to the above-mentioned components, compounding agents conventionally used in the rubber industry, for example, plasticizer components such as oil, zinc oxide, anti-aging agents, waxes, vulcanization accelerators, etc., may be appropriately added and kneaded as necessary.

In the finish kneading step, the kneaded product obtained in the base kneading step is kneaded with a crosslinking agent. The kneading temperature in the finish kneading step is, for example, higher than room temperature and lower than 80°C, and the kneading time is, for example, longer than 1 minute and shorter than 15 minutes. In the finish kneading step, in addition to the above components, a vulcanization accelerator, zinc oxide, etc. may be appropriately added and kneaded as necessary.

The rubber composition obtained as described above can then be molded into a tread by extruding it into a predetermined shape.

### 3. Tire manufacturing

The tire according to this embodiment can be manufactured by conventional methods. First, the rubber composition obtained above is molded into a predetermined shape to produce a tread. Next, it is combined with other rubber components on a tire molding machine to produce an unvulcanized tire.

Specifically, on the molded drum, the inner liner as a member to ensure the air-tightness of the tire, the carcass as a member to withstand the load, impact and filling air pressure received by the tire, the belt member as a member to strongly tighten the carcass to increase the rigidity of the tread, and the like are wound, both ends of the carcass are fixed to both side edges, a bead part as a member for fixing the tire to the rim is arranged, and they are formed into a toroid shape. Then the tread is pasted on the center of the outer circumference, and a sidewall is pasted to the radially outer side to form the side portion, thereby producing an unvulcanized tire.

The unvulcanized tire thus produced is then heated and pressurized in a vulcanizer to obtain a tire. The vulcanization step can be carried out by applying a known vulcanization method. The vulcanization temperature is, for example, higher than 120°C and lower than 200°C, and the vulcanization time is, for example, longer than 5 minutes and shorter than 15 minutes.

As described above, the tire obtained as above, through the combined effect of sipes formed with appropriate torsion and effect of a rubber composition manufactured with an appropriate silica/carbon black ratio, controls tire wear more appropriately. This ensures tread rigidity even in the later stages of wear, thereby improving the late-wear grip performance.

The tire according to the present invention can be suitably used as a passenger car tire, a large passenger car tire, a large SUV tire, a truck/bus tire, a motorcycle tire, a racing tire, a studless tire (winter tire), an all-season tire, a run-flat tire, etc., and is particularly preferred as a passenger car tire.

### [Examples]

The following examples (implementations) are considered preferable for implementation, but the scope of the present invention is not limited to these examples.

Table 1 shows the results calculated based on the grip performance evaluation method in the later stages of wear, assuming a tire (tire size: 175/60R18) consisting of a tread molded from the various compound materials listed below, and other rubber components.

### 1. Preparation of rubber composition

A rubber composition for the tread is prepared using the following compounding materials.

### (1) Compounding materials

### (a) Rubber component

(a-1) NR: TSR20
(a-2) SBR: HPR840 (S-SBR) manufactured by ENEOS Materials Corporation (Styrene content: 10% by mass, vinyl content: 42% by mass)

### (b) Compounding materials other than rubber components

(b-1) Carbon black: Dia Black N220 manufactured by Mitsubishi Chemical Corporation (N₂SA: 115 m²/g)
(b-2) Silica: UltraSil VN3 manufactured by Eponic Industries (N₂SA: 175 m²/g, average primary particle diameter: 17 nm)
(b-3) Silane coupling agent: NXT manufactured by Momentive Co., Ltd. (3-Octanoylthiopropyltriethoxysilane)
(b-4) Oil: Process oil A/OMIX manufactured by Sankyo Yuka Industry Co., Ltd.
(b-5) Resin: YS Resin PX850 manufactured by Yasuhara Chemical Co., Ltd. (Softening point 85°C, β-pinene resin (terpene resin))
(b-6) Wax: Ozoace 0355 manufactured by Nippon Seiro Co., Ltd.
(b-7) Anti-aging agent - 1: Nocrac 6C manufactured by Ouchi Shinko Chemical Industry Co., Ltd.
   (N-(1,3-dimethylbutyl)-N'-phenyl-p-phenylenediamine)
(b-8) Anti-aging agent - 2: Nocrac RD manufactured by Ouchi Shinko Chemical Industry Co., Ltd. (Poly(2,2,4-trimethyl-1,2-dihydroquinoline))
(b-9)Stearic acid: Beads stearic acid "Tsubaki" manufactured by NOF Corporation
(b-10) Zinc oxide: Two types of zinc oxide manufactured by Mitsui Mining & Smelting Co., Ltd.
(b-11) Sulfur: Powdered sulfur manufactured by Karuizawa Sulfur Co., Ltd.
(b-12) Accelerator-1: Nocceler CZ-G (CBS) manufactured by Ouchi Shinko Chemical Industry Co., Ltd. (N-cyclohexyl-2-benzothiazolyl sulfenamide)
(b-13) Accelerator-2: Nocceler D (DPG) manufactured by Ouchi Shinko Chemical Industry Co., Ltd. (1,3-diphenylguanidine)

### (2) Preparation of rubber composition for tread

Based on the formulations shown in Table 1, the materials other than sulfur and vulcanization accelerator were kneaded for 5 minutes at 150°C using a 1.7L Banbury mixer manufactured by Kobe Steel, Ltd. to obtain a kneaded product.

Next, sulfur and a vulcanization accelerator are added to the obtained kneaded product, and the mixture is kneaded using an open roll at 80°C for 5 minutes to obtain each rubber composition for the tread.

### 2. Tread molding

Next, the rubber composition obtained above is used to form a tread of a predetermined shape in which twisted sipes are formed such that the width is 2 mm or less and the depth is 20 mm or less, and the ratio X of the area of the intersection between the opening and the bottom of the groove is 95% or less.

### 3. Tire manufacturing

Next, the tread obtained above is pasted together with other tire components to form an unvulcanized tire, which is then press-vulcanized at 170°C for 10 minutes to produce the test tires for Examples 1 to 4 and Comparative Examples 1 to 4.

### 4. Performance evaluation test (evaluation of grip performance in the later stages of wear)

Each test tire is mounted on all wheels of a vehicle (a domestic FF vehicle with an engine displacement of 2000cc), inflated to an internal pressure of 230 kPa, and driven for 30,000 km. After that, the vehicle is driven on a test course with a dry asphalt surface, and the lap time is measured.

Furthermore, as a reference example, a tire manufactured by replacing the entire amount of SBR in the formulation of Comparative Example 3 with NR is used, and the lap time will be measured in the same manner.

Then, using the lap time of the reference example tire as a baseline, the reduction in lap time achieved by each test tire is calculated.

Next, the shortened lap time in Comparative Example 1 is set to 100 and indexed based on the following formula to evaluate the grip performance in the later stages of wear. A higher value indicates better grip performance in the later stages of wear. $\begin{matrix}Grip performance in the later stages of wear \\ = \left[\left(Results for the test tire\right)/\left(Results for Comparative Example 1\right)\right] \times 100\end{matrix}$

**[Table 1]**

| | Example | | | | Comparative Example | | | |
|---|---|---|---|---|---|---|---|---|
| | 1 | 2 | 3 | 4 | 1 | 2 | 3 | 4 |
| [Rubber composition formulation: parts by mass] | | | | | | | | |
| NR | 50 | 45 | 50 | 55 | 50 | 50 | 50 | 50 |
| SBR | 50 | 55 | 50 | 45 | 50 | 50 | 50 | 50 |
| Carbon Black (CB) | 30 | 30 | 30 | 30 | 30 | 10 | 10 | 40 |
| Silica (Si) | 90 | 60 | 30 | 90 | 90 | 5 | 5 | 10 |
| (Y = Si / CB: %) | (300) | (200) | (100) | (300) | (300) | (50) | (50) | (25) |
| Silane coupling agent | 8 | 5 | 3 | 2 | 8 | 8 | 8 | 1 |
| Oil | 15 | 15 | 15 | 15 | 15 | 15 | 15 | 15 |
| Resin | 15 | 15 | 15 | 15 | 15 | 15 | 15 | 15 |
| Wax | 1 | 1 | 1 | 1 | 1 | 1 | 1 | 1 |
| Anti-aging agent - 1 | 1 | 1 | 1 | 1 | 1 | 1 | 1 | 1 |
| Anti-aging agent - 2 | 1 | 1 | 1 | 1 | 1 | 1 | 1 | 1 |
| Stearic acid | 1 | 1 | 1 | 1 | 1 | 1 | 1 | 1 |
| Zinc oxide | 1 | 1 | 1 | 1 | 1 | 1 | 1 | 1 |
| Sulfur | 2 | 2 | 2 | 2 | 2 | 2 | 2 | 2 |
| Accelerator-1 | 1 | 1 | 1 | 1 | 1 | 1 | 1 | 1 |
| Accelerator-2 | 1 | 1 | 1 | 1 | 1 | 1 | 1 | 1 |

| [Sipe] | | | | | | | | |
|---|---|---|---|---|---|---|---|---|
| Area A of the opening (mm²) | 6 | 6 | 6 | 6 | 6 | 6 | 6 | 6 |
| Area B of the intersection (mm²) | 0.6 | 24 | 4.2 | 5.7 | 6 | 0.6 | 6 | 0.6 |
| X (= B / A: %) | 10 | 40 | 70 | 95 | 100 | 10 | 100 | 10 |
| X / Y | 0.03 | 0.20 | 0.70 | 0.32 | 0.33 | 0.20 | 2.00 | 0.40 |

| [Evaluation: Grip performance in the later stages of wear] | | | | | | | | |
|---|---|---|---|---|---|---|---|---|
| Evaluation results | 120 | 115 | 113 | 108 | 100 | 85 | 75 | 80 |

Although the present invention has been described above based on embodiments, the present invention is not limited to the above embodiments. Various modifications can be made to the above embodiments within the same and equivalent scope as the present invention.

The present invention (1) is,
a tire having a tread portion,
a groove having an opening facing the surface of the tread and a groove bottom, with a width of 2 mm or less and a depth of 20 mm or less is formed on the land portion of the tread portion surface,
the opening and the groove bottom intersect when the surface of the tread is viewed in planar view,
ratio X of the area of the intersection of the opening and the groove bottom to the area of the opening when viewed from above on the surface of the tread portion is 95% or less,
the tread portion is formed from a rubber composition containing rubber components, silica, and carbon black, wherein the ratio Y of the silica content (parts by mass) to the carbon black content (parts by mass) is more than 50%, and $X / Y < 1.5 .$

The present invention (2) is,
the tire according to the present invention (1), wherein the ratio X is 80% or less.

The present invention (3) is,
the tire according to the present invention (2), wherein the ratio X is 60% or less.

The present invention (4) is,
the tire of any combination of the present inventions (1) to (3), wherein the ratio X is 1% or more.

The present invention (5) is,
the tire of any combination of the present inventions (1) to (4), wherein the ratio Y is 100% or more.

The present invention (6) is,
the tire according to the present invention (5), wherein the ratio Y is 200% or more.

The present invention (7) is,
the tire of any combination of the present inventions (1) to (6), wherein the ratio Y is 380% or less.

The present invention (8) is,
the tire of any combination of the present inventions (1) to (7), wherein the X/Y ratio is 1.2 or less.

The present invention (9) is,
the tire according to the present invention (8), wherein the X/Y ratio is 0.8 or less.

The present invention (10) is,
the tire of any combination of the present inventions (1) to (9), wherein the X/Y ratio is 0.03 or more.

The present invention (11) is,
the tire of any combination of the present inventions (1) to (10), wherein the tread portion has a thickness of 10 mm or more and 20 mm or less.

The present invention (12) is,
the tire of any combination of the present inventions (1) to (11), wherein the tread portion is formed from multiple layers with a cap rubber layer as the outermost layer.

The present invention (13) is,
the tire according to the present invention (12), wherein the thickness of the cap rubber layer over the entire tread portion is 10% or more.

The present invention (14) is,
the tire according to the present invention (13), wherein the thickness of the cap rubber layer over the entire tread portion is 70% or more.

The present invention (15) is,
the tire of any combination of the present inventions (1) to (14), wherein the tire has an aspect ratio of 30% or more and 60% or less.

The present invention (16) is,
the tire of any combination of the present inventions (1) to (15), wherein the rubber composition contains styrene-butadiene rubber (SBR) with a styrene content of 25% by mass or less.

The present invention (17) is,
the tire according to the present invention (16), wherein the content of styrene-butadiene rubber (SBR) in 100 parts by mass of the rubber component is 40 parts by mass or more.

The present invention (18) is,
the tire of any combination of the present inventions (1) to (17), wherein the content of isoprene-based rubber in 100 parts by mass of the rubber component is 40 parts by mass or more.

The present invention (19) is,
the tire of any combination of the present inventions (1) to (18), wherein the particle size of silica is 17 nm or less.

The present invention (20) is,
the tire of any combination of the present inventions (1) to (19), wherein the rubber composition contains at least one resin component selected from rosin-based resin, styrene-based resin, coumarone-based resin, terpene-based resin, C5 resin, C9 resin, C5C9 resin, and acrylic resin.

### [Description of reference signs]

- 1.: Land portion
- 2.: Opening
- 3.: Groove bottom
- S.: Intersection

## Claims

1. A tire having a tread portion,
a groove having an opening facing the surface of the tread and a groove bottom, with a width of 2 mm or less and a depth of 20 mm or less is formed on the land portion of the tread portion surface,
the opening and the groove bottom intersect when the surface of the tread is viewed in planar view,
ratio X of the area of the intersection of the opening and the groove bottom to the area of the opening when viewed from above on the surface of the tread portion is 95% or less,
the tread portion is formed from a rubber composition containing rubber components, silica, and carbon black, wherein the ratio Y of the silica content (parts by mass) to the carbon black content (parts by mass) is more than 50%, and$X / Y < 1.5 .$

2. The tire according to Claim 1, wherein the ratio X is 80% or less.

3. The tire according to Claim 2, wherein the ratio X is 60% or less.

4. The tire according to any one of Claims 1-3, wherein the ratio X is 1% or more.

5. The tire according to any one of Claims 1-4, wherein the ratio Y is 100% or more.

6. The tire according to Claim 5, wherein the ratio Y is 200% or more.

7. The tire according to any one of Claims 1-6, wherein the ratio Y is 380% or less.

8. The tire according to any one of Claims 1-7, wherein the X/Y ratio is 1.2 or less.

9. The tire according to Claim 8, wherein the X/Y ratio is 0.8 or less.

10. The tire according to any one of Claims 1-9, wherein the X/Y ratio is 0.03 or more.

11. The tire according to any one of Claims 1-10, wherein the tread portion has a thickness of 10 mm or more and 20 mm or less.

12. The tire according to any one of Claims 1-11, wherein the tread portion is formed from multiple layers with a cap rubber layer as the outermost layer.

13. The tire according to Claim 12, wherein the thickness of the cap rubber layer over the entire tread portion is 10% or more.

14. The tire according to Claim 13, wherein the thickness of the cap rubber layer over the entire tread portion is 70% or more.

15. The tire according to any one of Claims 1-14, wherein the tire has an aspect ratio of 30% or more and 60% or less.

16. The tire according to any one of Claims 1-15, wherein the rubber composition contains styrene-butadiene rubber (SBR) with a styrene content of 25% by mass or less.

17. The tire according to Claim 16, wherein the content of styrene-butadiene rubber (SBR) in 100 parts by mass of the rubber component is 40 parts by mass or more.

18. The tire according to any one of Claims 1-17, wherein the content of isoprene-based rubber in 100 parts by mass of the rubber component is 40 parts by mass or more.

19. The tire according to any one of Claims 1-18, wherein the particle size of silica is 17 nm or less.

20. The tire according to any one of Claims 1-19, wherein the rubber composition contains at least one resin component selected from rosin-based resin, styrene-based resin, coumarone-based resin, terpene-based resin, C5 resin, C9 resin, C5C9 resin, and acrylic resin.
